# EUROPÄISCHE PATENTSCHRIFT

(11) **EP 4 278 030 B1**
(45) Veröffentlichungstag und Bekanntmachung des Hinweises auf die Patenterteilung: **19.02.2025**
(21) Anmeldenummer: 22721068.9
(22) Anmeldetag: 07.04.2022
(51) Int. Cl.: C25B 1/04, C25B 3/26, C25B 9/00, C25B 9/77, C25B 15/00, C25B 15/08, C23F 13/06, C23F 13/20

(54) **ELEKTROLYSEEINRICHTUNG**
ELECTROLYSIS DEVICE
DISPOSITIF D'ÉLECTROLYSE

(30) Priorität: 14.04.2021 EP 21168348
(43) Veröffentlichungstag der Anmeldung: 22.11.2023
(73) Patentinhaber: Siemens Energy Global GmbH & Co. KG, 81739 München (DE)
(72) Erfinder: HANEBUTH, Marc, 90482 Nürnberg (DE); RÜCKERT, Stephan, 91058 Erlangen (DE); UTZ, Peter, 90419 Nürnberg (DE)
(86) Internationale Anmeldenummer: PCT/EP2022/059205
(87) Internationale Veröffentlichungsnummer: WO 2022/218794

(56) Entgegenhaltungen:
- EP-A1- 0 187 001
- WO-A1-94/04719
- DE-C1- 4 136 917
- FR-A1- 2 590 908
- JP-A- S62 170 491

## Beschreibung

Die Erfindung betrifft eine Elektrolyseeinrichtung mit einer Mehrzahl von Elektrolysezellen, die elektrisch in Reihe geschaltet und die zumindest teilweise in einer Stapelrichtung aufeinanderfolgend in einem Zellenstapel angeordnet sind, wobei die Reihenschaltung mit einer elektrischen Energiequelle elektrisch koppelbar ist,
mit einer Zellenversorgungseinheit zum Versorgen der Elektrolysezellen in einem bestimmungsgemäßen Betrieb mit wenigstens einem Betriebsstoff, und mit an die Zellenversorgungseinheit und an den Zellenstapel angeschlossenen Versorgungsleitungen, wobei ein Werkstoff der Versorgungsleitungen Metall aufweist.

Elektrolysezellen, die der Umwandlung von chemischen Stoffen unter Einwirkung von Elektrizität in andere chemische Stoffe dienen, sind im Stand der Technik umfänglich bekannt. In der Regel wird mithilfe eines elektrischen Stroms eine chemische Reaktion, also eine Stoffumwandlung, herbeigeführt. Dies wird Elektrolyse genannt. Eine bekannte und vielseitig genutzte Form der Elektrolyse ist die Wasserelektrolyse. Bei der Wasserelektrolyse wird Wasser unter Nutzung des elektrischen Stroms in seine Bestandteile, nämlich Wasserstoff und Sauerstoff, zerlegt. Dem Grunde nach können jedoch auch andere Stoffe der Elektrolyse unterzogen werden, beispielsweise Kohlenstoffdioxid oder dergleichen.

Üblicherweise handelt es sich hierbei um fluide Stoffe, die über entsprechende Versorgungsleitungen den Elektrolysezellen zugeführt werden können, in denen die eigentliche Elektrolyse durchgeführt wird. Die Elektrolyseprodukte sind häufig ebenfalls in fluider Form und werden über weitere Versorgungsleitungen aus den Elektrolysezellen abgeführt. Die Versorgungsleitungen sind in der Regel an eine Zellenversorgungseinheit angeschlossen, die dem Versorgen der Elektrolysezellen für den bestimmungsgemäßen Betrieb mit den jeweiligen Stoffen beziehungsweise wenigstens einem Betriebsstoff dienen. Versorgen meint hier also nicht nur ein Zuführen des Betriebsstoffs beziehungsweise des zu elektrolysierenden Stoffs, sondern auch ein Abführen des jeweiligen Elektrolyseprodukts.

Besonders die Bereitstellung von Wasserstoff erweist sich als industriell interessant, zumal Wasserstoff ein vielseitig nutzbarer Energieträger sein kann. Wasserstoff kann mit einer Elektrolyseeinrichtung, auch Elektrolyseur genannt, unter Ausnutzung von regenerativ erzeugter elektrischer Energie bereitgestellt werden. Eine Möglichkeit der Erzeugung von Wasserstoff besteht darin, eine Elektrolyseeinrichtung zu nutzen, deren Elektrolysezellen auf Protonen-Austausch-Membranen (englisch: proton exchange membrane, PEM) basieren. Das Prinzip einer PEM-basierten Elektrolyseeinrichtung beziehungsweise PEM-basierten Elektrolysezelle ist im Stand der Technik bekannt, weshalb von weiteren Erläuterungen hierzu abgesehen wird. Eine Elektrolysezelle zur Erzeugung von Wasserstoff und Sauerstoff aus Wasser ist beispielsweise durch die DE 10 2011 007 759 A1 offenbart. Aber auch die DE 10 2019 205 316 A1 offenbart eine entsprechende Elektrolysezelle für eine energieeffiziente Wasserstoffherstellung. Ferner offenbart die DE 21 2018 000 414 U1 ein Wasserstofferzeugungssystem.

Gattungsgemäße Elektrolyseeinrichtungen weisen in der Regel eine Mehrzahl von Elektrolysezellen auf, die üblicherweise elektrisch in Reihe geschaltet sind. Die hierdurch gebildete Reihenschaltung ist mit einer elektrischen Energiequelle elektrisch gekoppelt, die eine geeignete elektrische Spannung bereitstellt, sodass mittels der Elektrolysezellen der vorgesehene Prozess der elektrochemischen Stoffumwandlung realisiert werden kann.

Die Elektrolysezellen sind darüber hinaus in einer Stapelrichtung aufeinanderfolgend angeordnet, sodass sie einen Zellenstapel bilden. Durch die gestapelte Anordnung ist es möglich, dass die aufeinanderfolgend angeordneten Elektrolysezellen elektrisch unmittelbar kontaktiert werden können, sodass separate elektrische Anschlüsse der Elektrolysezellen weitgehend reduziert werden können.

Innerhalb des Zellenstapels ist ferner ein Versorgungsleitungssystem mit Zellenanschlussleitungen (englisch: manifold) beziehungsweise eine Versorgungsstruktur vorgesehen, welche unter anderem dazu dient, den wenigstens einen Betriebsstoff zu den Elektrolysezellen zuzuführen beziehungsweise abzuführen. Der Betriebsstoff kann zum Beispiel das zugeführte Fluid, beispielsweise Wasser, und/oder das Reaktionsprodukt, beispielsweise Wasserstoff und Sauerstoff, umfassen. Der Zellenstapel (englisch: stack) wird in der Regel mit einer bestimmten Elektrolyseleistung so betrieben, dass ein elektrischer Strom möglichst klein, aber eine elektrische Spannung möglichst groß ist. Dies wird durch eine geeignete Stapelung der Elektrolysezellen im Zellenstapel erreicht. Dadurch können sich elektrische Spannungen an den jeweiligen Elektrolysezellen im Zellenstapel zur Zellenstapelspannung addieren, während die auf diese Weise in Reihe geschalteten Elektrolysezellen mit einem im Wesentlichen gleichen Strom betrieben werden können.

Die Elektrolyseleistung wird durch die Energiequelle bereitgestellt, die zu diesem Zweck an jeweilige gegenüberliegende Enden des Zellenstapels anschließbar ist. In einem Zellenstapel können eine Vielzahl von Elektrolysezellen angeordnet sein, beispielsweise mehr als 100 Elektrolysezellen, insbesondere mehrere hundert Elektrolysezellen, vorzugsweise jedoch nicht mehr als etwa 400 Elektrolysezellen. Bei einer Elektrolyse von Wasser zu Wasserstoff und Sauerstoff beträgt eine elektrische Spannung an einer jeweiligen der Elektrolysezellen etwa 1,5 V bis 2,5 V. Daraus ergibt sich die elektrische Spannung am Zellenstapel entsprechend, sodass die elektrische Spannung am Zellenstapel häufig 100 V übersteigt, sogar mehrere hundert Volt betragen kann.

Die Elektrolyseeinrichtung umfasst neben dem Zellenstapel weitere Komponenten, wie zum Beispiel Pumpen, Wärmetauscher, Abscheidebehälter, die für den bestimmungsgemäßen Betrieb der Elektrolyseeinrichtung beziehungsweise der Elektrolysezellen erforderlich sind. Diese Komponenten werden vorliegend zusammengefasst durch die Zellenversorgungseinheit zum Versorgen der Elektrolysezellen für den bestimmungsgemäßen Betrieb mit wenigstens einem Betriebsstoff.

Die Zellenversorgungseinheit ist mit den in eine Stapelrichtung aufeinanderfolgend angeordneten Elektrolysezellen über Versorgungsleitungen angeschlossen, die an den gegenüberliegenden Enden der aufeinanderfolgend angeordneten Elektrolysezellen angeschlossen sind. Die Versorgungsleitungen sind in der Regel aus einem Werkstoff wie Metall oder dergleichen gebildet.

Zwischen den Enden des Zellenstapels beziehungsweise der aufeinanderfolgend angeordneten Elektrolysezellen tritt eine entsprechend hohe elektrische Spannung auf. Für die Versorgungsleitungen, die in der Regel aus einem Metall gebildet sind, ist es daher erforderlich, dass sie jeweilige elektrische Isolierabschnitte aufweisen, die dazu dienen, eine elektrisch gut leitfähige Verbindung zwischen den Enden der aufeinanderfolgend angeordneten Elektrolysezellen und somit zwischen den elektrischen Anschlüssen der elektrischen Energiequelle zu vermeiden.

Dem Grunde nach hat sich die Anwendung gemäß dem Stand der Technik zwar bewährt, jedoch hat sich herausgestellt, dass insbesondere im Bereich des an den elektrischen Isolierabschnitt anschließenden Bereichs der Versorgungsleitung, der mit einem positiven elektrischen Potential der elektrischen Energiequelle im bestimmungsgemäßen Betrieb beaufschlagt ist, eine Korrosion auftreten kann. Dies ist nicht nur für die Elektrolyseeinrichtung als solche schädlich, sondern kann auch zu Verunreinigungen des wenigstens einen Betriebsstoffs und damit zu Störungen beim bestimmungsgemäßen Betrieb der Elektrolysezellen führen.

Um diese Problematik zu reduzieren, ist es im Stand der Technik bekannt, eine spezifische elektrische Leitfähigkeit des Wassers möglichst klein zu halten und durch eine möglichst lange Isolationsstrecke oder auch eine Querschnittsreduktion im Bereich des jeweiligen Isolierabschnitts die Korrosion kinetisch zu hemmen und so die Wirkung zeitlich zu strecken. Die Korrosion kann jedoch hierdurch dem Grunde nach nicht vermieden werden. Insbesondere die stets vorhandene, wenn auch geringe, elektrische Leitfähigkeit von Wasser, insbesondere innerhalb der durch den Isolierabschnitt gebildeten Isolationsstrecke, führt zu Streuströmen im Wasser, insbesondere innerhalb der Isolierstrecke. Dadurch bleibt das Problem der Korrosion weiterhin vorhanden.

Der Erfindung liegt die Aufgabe zugrunde, das vorgenannte Korrosionsproblem zu reduzieren.

Als Lösung wird mit der Erfindung eine Elektrolyseeinrichtung gemäß dem unabhängigen Anspruch 1 vorgeschlagen.

Vorteilhafte Weiterbildungen ergeben sich durch Merkmale der abhängigen Ansprüche.

In Bezug auf eine gattungsgemäße Elektrolyseeinrichtung wird mit der Erfindung insbesondere vorgeschlagen, dass die Versorgungsleitungen ausschließlich an einem ersten Ende des Zellenstapels angeschlossen sind, sodass das erste Ende des Zellenstapels mit der Zellenversorgungseinheit elektrisch gekoppelt ist, wobei das erste Ende des Zellenstapels mit einem negativen elektrischen Potential der elektrischen Energiequelle koppelbar ist.

Die Erfindung basiert unter anderem auf dem Gedanken, dass durch die erfindungsgemäße Konstruktion der Elektrolyseeinrichtung erreicht werden kann, dass die Versorgungsleitungen nur am ersten Ende des Zellenstapels angeordnet beziehungsweise angeschlossen zu werden brauchen. Dadurch können die Versorgungsleitungen im Wesentlichen auf einem gleichen elektrischen Potential gehalten werden, welches vorzugsweise einem elektrischen Bezugspotential der Zellenversorgungseinheit entspricht, sodass Isolierabschnitte bei Versorgungsleitungen weitgehend vermieden werden können. Die Versorgungsleitungen können somit eine elektrische Kopplung beziehungsweise einen elektrischen Anschluss des ersten Endes des Zellenstapels an die Zellenversorgungseinheit bereitstellen. Am ersten Ende des Zellenstapels ist vorzugsweise auch eines der beiden elektrischen Potentiale der elektrischen Energiequelle anschließbar. Das elektrische Bezugspotential der Zellenversorgungseinheit kann zum Beispiel eine elektrische Masse der Zellenversorgungseinheit oder dergleichen sein. Dadurch kann auch die eingangs erläuterte Korrosion weitgehend vermieden, wenn nicht sogar vollständig verhindert werden. Vorzugsweise ist das zweite Ende des Zellenstapels versorgungsleitungsfrei ausgebildet. Am zweiten Ende des Zellenstapels braucht lediglich das andere elektrisch Potential der elektrischen Energiequelle anschließbar zu sein. Schädliche korrosionsfördernde elektrische Potentialdifferenzen im Bereich der Versorgungsleitungen können somit weitgehend vermieden werden, insbesondere auch deshalb, weil die Versorgungsleitungen selbst elektrisch leitfähig sind.

Vorzugsweise ist das negative elektrische Potential der elektrischen Energiequelle mit dem ersten Ende des Zellenstapels und das positive elektrische Potential der elektrischen Energiequelle mit dem zweiten Ende des Zellenstapels elektrisch verbunden. Durch die Potentialdifferenz zwischen dem ersten und dem zweiten elektrischen Potential der elektrischen Energiequelle ist eine elektrische Spannung bestimmt, mit der der Zellenstapel beaufschlagt ist. Aufgrund der elektrisch in Reihe geschalteten Elektrolysezellen liegt an jeder der Elektrolysezellen eine elektrische Teilspannung an.

Durch die erfindungsgemäße Konstruktion kann unter anderem also erreicht werden, dass der korrosive Effekt reduziert werden kann, weil die für den korrosiven Effekt schädlichen Bedingungen reduziert werden können. Aufgrund der elektrischen Potentialdifferenz an den Isolierabschnitten der Versorgungsleitungen kann beim Stand der Technik ein elektrischer Strom im durch die jeweilige Versorgungsleitung geführten Fluid, insbesondere wenn es Wasser ist, auftreten. Infolgedessen kann es zur Freisetzung von Wasserstoff und Hydroxidionen kommen. Durch die Erfindung können die für den korrosiven Effekt relevanten Bedingungen, nämlich insbesondere die Hydroxidionen, reduziert oder sogar vollständig vermieden werden. Sie stehen daher für den unerwünschten korrosiven Effekt nicht mehr zur Verfügung. Insgesamt ermöglicht es die Erfindung somit, die unerwünschte Korrosionswirkung zu reduzieren oder sogar vollständig zu vermeiden.

Die Elektrolysezellen können beispielsweise in einem einzigen Zellenstapel aufeinanderfolgend angeordnet sein. Vorzugsweise sind die Elektrolysezellen innerhalb des Zellenstapel elektrisch in Reihe geschaltet. Die gegenüberliegenden Enden des Zellenstapels, und zwar das erste und das zweite Ende, sind an die jeweiligen elektrischen Potentiale der elektrischen Energiequelle anschließbar. Sie können beispielsweise unmittelbar an die elektrische Energiequelle angeschlossen sein. Vorzugsweise sind sie jedoch über eine Steuereinheit an die elektrische Energiequelle angeschlossen, sodass die Funktion der Elektrolysezellen bedarfsweise eingestellt werden kann.

Die elektrische Energiequelle kann beispielsweise eine beliebige Spannungsquelle oder auch Stromquelle sein, die eine ausreichende Leistung für die Durchführung der Elektrolyse durch die Elektrolysezellen bereitzustellen vermag. Eine Elektrolyseleistung kann bei einer spezifischen Flächenstromdichte abhängig von den Abmessungen der jeweiligen Elektrolysezelle, insbesondere ihrer elektrolysetechnisch wirksamen Bereiche, bestimmt sein.

Die Versorgungsleitungen weisen eine Durchgangsöffnung mit einem geeigneten Innendurchmesser beziehungsweise Innenquerschnitt auf, um den jeweiligen Betriebsstoff möglichst verlustfrei zu den Elektrolysezellen hinführen zu können und/oder möglichst verlustfrei von den jeweiligen Elektrolysezellen abführen zu können.

Dem Grunde nach reicht es aus, wenn eine einzige der Versorgungsleitungen vollständig elektrisch leitfähig ausgebildet ist. Einige oder alle anderen der Versorgungsleitungen brauchen dann keine elektrische Leitfähigkeit zwischen ihren jeweiligen Enden bereitzustellen. Diese Versorgungsleitungen können elektrische Isolierabschnitte aufweisen, sodass deren gegenüberliegende Enden voneinander elektrisch isoliert sind. Die elektrischen Isolierabschnitte dieser Versorgungsleitungen können beispielsweise aus einem geeigneten Werkstoff gebildet sein, der mit der jeweiligen Versorgungsleitung mechanisch fest verbunden sein kann. Beispielsweise kann es sich um einen ringförmigen Abschnitt handeln, der an einem jeweiligen Ende einer jeweiligen Versorgungsleitung angeordnet ist. Darüber hinaus kann der Isolierabschnitt natürlich auch in die Versorgungsleitung integriert sein, sodass die Versorgungsleitung zwei voneinander elektrisch isolierte Versorgungsleitungsabschnitte aufweist, die durch den Isolierabschnitt voneinander getrennt sind. Diese hierdurch gebildeten Einheiten sind vorzugsweise fluiddicht miteinander verbunden, wobei vorzugsweise ein im Wesentlichen konstanter Innenquerschnitt für den jeweiligen Betriebsstoff bereitgestellt wird.

Als Werkstoff für den elektrischen Isolierabschnitt kann beispielsweise ein Kunststoff, eine Keramik, aber auch ein Metalloxid wie zum Beispiel Titandioxid, Aluminiumoxid und/oder dergleichen vorgesehen sein. Darüber hinaus kann auch ein Verbundwerkstoff vorgesehen sein, der beispielsweise aus einem Kunststoff gebildet sein kann, der zum Beispiel faserverstärkt sein kann. Natürlich können auch nahezu beliebige Kombinationen hiervon vorgesehen sein, die vorzugsweise derart gewählt sind, dass eine chemische Reaktion mit dem jeweils zu führenden Betriebsstoff im Wesentlichen vermieden ist.

Der Werkstoff der Versorgungsleitung weist zumindest Metall auf. Das Metall kann zum Beispiel ein Stahl, insbesondere ein Edelstahl, sein. Darüber hinaus kann natürlich auch ein anderes Metall, beispielsweise Titan oder dergleichen, zum Einsatz kommen. Natürlich können auch entsprechende Metalllegierungen vorgesehen sein.

Gemäß einer Weiterbildung wird vorgeschlagen, dass der Zellenstapel Zellenanschlussleitungen, auch Manifold genannt, zum fluidtechnischen Koppeln der Elektrolysezellen mit den am ersten Ende angeschlossenen Versorgungsleitungen aufweist. Dadurch können die Versorgungsleitungen mit den Elektrolysezellen fluidtechnisch gekoppelt werden. Die Zellenanschlussleitungen können nach Art einer Zellenstapelversorgungsstruktur durch den Zellenstapel selbst bereitgestellt sein. Es braucht also insbesondere keine separate Versorgungsstruktur im Bereich des Zellenstapels vorgesehen zu werden, um die Elektrolysezellen an die Versorgungsleitungen anzuschließen. Dies erleichtert auch den Anschluss der Versorgungsleitungen an den Zellenstapel. Die Zellenanschlussleitungen sind vorzugsweise in den Zellenstapel integriert. Beispielsweise kann vorgesehen sein, dass jede der Elektrolysezellen einen jeweiligen Abschnitt einer jeweiligen der Zellenanschlussleitungen bereitstellt. Durch das Stapeln der Elektrolysezellen können dann die jeweiligen Abschnitte fluidtechnisch miteinander verbunden und abgedichtet sein, sodass die jeweiligen Zellenanschlussleitungen ausgebildet werden können.

Es wird ferner vorgeschlagen, dass die Zellenanschlussleitungen jeweils eine Durchgangsöffnung aufweisen, die so ausgebildet ist, dass ein Druckabfall an den Zellenanschlussleitungen einen gleichmäßigen bestimmungsgemäßen Betrieb der Elektrolysezellen erlaubt. Vorzugsweise ist der Druckabfall möglichst klein, insbesondere vernachlässigbar klein, im bestimmungsgemäßen Betrieb der Elektrolyseeinrichtung. Dadurch kann erreicht werden, dass die Elektrolysezellen im bestimmungsgemäßen Betrieb im Wesentlichen gleich beansprucht werden können, obwohl die Versorgung durch die ausschließlich am ersten Ende des Zellenstapels angeschlossenen Versorgungsleitungen erfolgt. Beispielsweise kann hierzu ein entsprechend groß gewählter Innendurchmesser der Zellenanschlussleitungen vorgesehen sein, sodass zum Beispiel ein Druckabfall über eine jeweilige Leitungslänge der jeweiligen Zellenanschlussleitungen klein im Vergleich zu einem Betriebsdruck an den Elektrolysezellen ist. Es kann aber auch vorgesehen sein, dass der Innendurchmesser der Zellenanschlussleitungen abhängig von einem jeweiligen Abstand einer Position der jeweiligen Zellenanschlussleitungen vom ersten Ende des Zellenstapels ist. Beispielsweise kann der Innendurchmesser mit zunehmendem Abstand vom ersten Ende des Zellenstapels zumindest teilweise kleiner sein.

Um die Wirkung der Erfindung weiter zu verbessern, wird vorgeschlagen, dass die Durchgangsöffnung eine Innenoberfläche aufweist, die mit einer anodisch stabilen Schicht beschichtet ist. Durch die anodisch stabile Schicht kann erreicht werden, dass etwaig vorhandene Hydroxidionen im Wesentlichen keinen Reaktionspartner finden, sodass der Effekt der Korrosion weiter reduziert werden kann. Die anodisch stabile Schicht kann zum Beispiel einen Kunststoff, ein Metalloxid wie beispielsweise Titandioxid oder dergleichen aufweisen.

Gemäß einer weiteren Weiterbildung wird vorgeschlagen, dass die Zellenanschlussleitungen zumindest teilwiese nicht-metallisch ausgebildet sind. Die Zellenanschlussleitungen können zum Beispiel einen Kunststoff, einen Keramikwerkstoff oder dergleichen aufweisen. Dadurch kann vermieden werden, dass Metallionen bereitgestellt werden können, die unter anderem zum unerwünschten korrosiven Effekt oder auch zu den vorgenannten Verunreinigungen führen können.

Weiterhin wird vorgeschlagen, dass die Zellenanschlussleitungen zumindest teilweise elektrisch isoliert ausgebildet sind. Dadurch kann insbesondere bei einem Aufbau nach Art des Zellenstapels eine elektrische Isolation der aufeinanderfolgend beziehungsweise gestapelt angeordneten Elektrolysezellen erreicht werden. Für die Versorgung der Elektrolysezellen brauchen also keine separaten elektrischen Isoliermaßnahmen vorgesehen zu werden. Die Zellenanschlussleitungen können zum Beispiel an einer Innenseite ihrer Durchgangsöffnungen eine Schicht aus einem geeigneten Werkstoff aufweisen. Diese Schicht kann durch eine Beschichtung aus einem elektrisch nicht leitfähigen Kunststoff, einen elektrisch nicht leitfähigen Keramikwerkstoff oder dergleichen aufweisen.

Darüber hinaus wird vorgeschlagen, dass die Versorgungsleitungen zumindest teilweise isolierabschnittslos ausgebildet sind. Dadurch können die Versorgungsleitungen einerseits im Wesentlichen homogen aus einem einzigen Werkstoff, beispielsweise Metall, insbesondere Edelstahl gebildet sein und andrerseits kann eine gute elektrische Kopplung zwischen dem ersten Ende des Zellenstapels und der Zellenversorgungseinheit erreicht werden. Vorzugsweise sind die Versorgungsleitungen im Wesentlichen gleich zumindest in Bezug auf den Werkstoff ausgebildet. Sie können unter anderem auch den gleichen Innenquerschnitt aufweisen.

Es wird ferner vorgeschlagen, dass die Zellenversorgungseinheit zumindest mittelbar elektrisch geerdet ist. Durch die Erdung kann die Zellenversorgungseinheit mit den mit ihr elektrisch gekoppelten Versorgungsleitungen auf ein vorgegebenes Bezugspotential gelegt werden. Hierdurch kann zugleich auch das negative Potential der elektrischen Energiequelle, welches über die Versorgungsleitungen mit der Zellenversorgungseinheit elektrisch gekoppelt ist, ebenso mittelbar zumindest geerdet sein. Anders als im Stand der Technik ist somit der Zellenstapel gegenüber dem Erdpotential auf einem definierten elektrischen Potential und somit nicht mehr schwimmend potentialbehaftet. Somit kann hierdurch eine elektrische Potentialdifferenz beziehungsweise elektrische Spannung im Bereich der Versorgungsleitungen weitgehend vermieden werden. Dies erlaubt es, die Zuverlässigkeit der Funktion der Erfindung weiter zu verbessern.

Darüber hinaus wird vorgeschlagen, dass die Erdung eine Opferanode und/oder eine Spannungsquelle aufweist, mittels welcher die Zellenversorgungseinheit mit einem gegenüber dem Erdpotential negativen elektrischen Potential beaufschlagbar ist. Dadurch kann ein "kathodischer Korrosionsschutz" erreicht werden. Wird eine Spannungsquelle genutzt, kann das negative elektrische Potential der Spannungsquelle mit der Zellenversorgungseinheit und mit den an sie angeschlossenen Versorgungsleitungen elektrisch verbunden sein. Das negative elektrische Potential der Spannungsquelle ist dabei vorzugsweise zugleich entsprechend geerdet. Für eine gute Funktion des auf diese Weise realisierten Korrosionsschutzes kann vorgesehen sein, dass die Spannungsquelle eine elektrische Spannung in einem Bereich von etwa -2 V bis etwa null Volt in Bezug auf das Erdpotential bereitstellt. Besonders vorteilhaft erweist es sich, wenn diese elektrische Spannung in einem Bereich von etwa -1 V bis etwa -0,8 V gewählt ist. Mit einer in diesem Bereich gewählten elektrischen Spannung kann eine Korrosion von zum Beispiel Edelstahl auch unter maritimen Bedingungen, insbesondere bei Off-Shore-Anwendungen, vermieden werden. Insbesondere kann hierdurch eine äußere Korrosionserscheinung reduziert beziehungsweise verhindert werden.

Um gleichermaßen eine innere Korrosionserscheinung zu reduzieren beziehungsweise zu vermeiden, kann vorzugsweise vorgesehen sein, dass eine weitere Elektrode nach Art einer Gegenelektrode für die Erdung genutzte Elektrode für den kathodischen Korrosionsschutz im Bereich der Zellenversorgungseinheit angeordnet ist. Die innere Korrosionserscheinung bezieht sich insbesondere auf Korrosionseffekte innerhalb der Elektrolyseeinrichtung, besonders innerhalb der Zellenversorgungseinheit. Beispielsweise kann es sich hierbei um eine Titan-Elektrode, beziehungsweise Titan-Anode, handeln, die mit einem Mischoxid beschichtet sein kann. Vorzugsweise ist die auf diese Weise gebildete Anode in einer Flüssigphase eines Sauerstoffabscheidebehälters der Zellenversorgungseinheit angeordnet.

Besonders vorteilhaft sind die Teilstapel versorgungstechnisch parallel an die Zellenversorgungseinheit angeschlossen. Auf diese Weise kann für die Teilstapel eine gute Versorgung mit dem wenigstens einen Betriebsstoff erreicht werden. Das Versorgen kann ein Zuführen beziehungsweise auch ein Abführen des Betriebsstoffs oder während der Elektrolyse erzeugter Stoffe umfassen.

Im Zellenstapel beziehungsweise in den Elektrolysezellen ausgebildete Versorgungstrukturen, insbesondere die Zellenanschlussleitungen, können als interne Isolationsstrecken dienen. Dabei können Werkstoffe, mit denen beispielsweise das zu elektrolysierende Wasser innerhalb des Zellenstapels kontaktiert wird, ausgenommen im Bereich jeweiliger aktiver Zellflächen der jeweiligen Elektrolysezellen, mindestens eine der folgenden drei Anforderungen erfüllen:
- Die Werkstoffe sind nicht-metallisch;
- elektrisch potentialbeaufschlagte Metalle sind mit einer oxidationsstabilen Schicht wie beispielsweise Titandioxid, einem Polymer oder dergleichen beschichtet;
- nicht-beschichtete Metalle sind elektrisch nicht angebunden, das heißt, im Wesentlichen elektrisch potentialfrei, insbesondere schwimmend, angebunden.

Mit der Erfindung kann unter anderem auch erreicht werden, dass die Elektroden der aktiven Zellflächen der Elektrolysezellen als anodische Gegenelektroden wirken können. Dadurch kann zum Beispiel an jeweiligen Anoden der Elektrolysezellen minimal mehr Sauerstoff gebildet und an jeweiligen Kathoden der jeweiligen Elektrolysezellen minimal weniger Wasserstoff erzeugt werden. Diese Veränderungen während der Elektrolyse wirken sich jedoch auf den Wirkungsgrad und die Sicherheit der Elektrolyseeinrichtung nicht signifikant aus. Vielmehr überwiegt der Vorteil der Erfindung, dass keine Fremdionen aus metallischen Elementen aufgrund von Streuströmen freigesetzt werden können.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination sondern auch in anderen Kombinationen verwendbar, ohne den Rahmen der Erfindung zu verlassen.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale beziehungsweise Funktionen.

Es zeigen:
FIG 1 in einer schematischen Blockdarstellung eine Elektrolyseeinrichtung zum Elektrolysieren von Wasser;
FIG 2 eine schematische Schnittdarstellung einer Versorgungsleitung der Elektrolyseeinrichtung gemäß FIG 1 im Bereich eines Isolierabschnitts;
FIG 3 eine schematische Blockdarstellung wie FIG 1 einer weiteren Elektrolyseeinrichtung zum Elektrolysieren von Wasser, bei der Versorgungsleitungen nur an einem ersten Ende eines Zellenstapels gemäß einer ersten Ausgestaltung angeschlossen sind; und
FIG 4 eine schematische Darstellung wie FIG 3 für eine zweite Ausgestaltung der Elektrolyseeinrichtung.

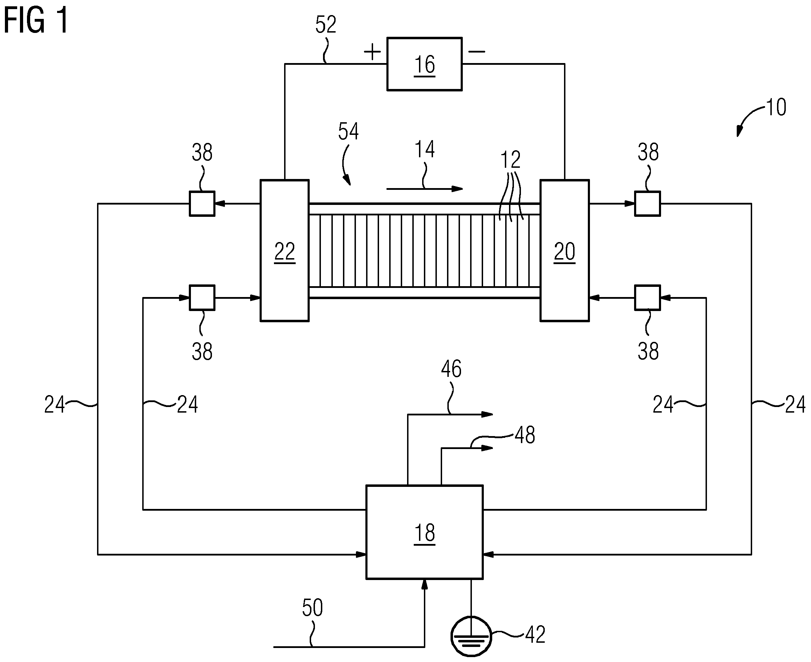

FIG 1 zeigt in einer schematischen Blockdarstellung eine Elektrolyseeinrichtung 10, die einen Zellenstapel 54 aufweist, der eine Mehrzahl von Elektrolysezellen 12 aufweist, die in einer Stapelrichtung 14 aufeinanderfolgend angeordnet sind. Die Elektrolysezellen 12 dienen vorliegend dazu, auf elektrochemischem Wege Wasser in seine Bestandteile Sauerstoff und Wasserstoff zu zersetzen. Die Elektrolyseeinrichtung 10 dient daher vorliegend der Erzeugung von Wasserstoff und Sauerstoff aus Wasser.

Die Elektrolysezellen 12 sind vorliegend unmittelbar benachbart zueinander angeordnet, sodass sich jeweilige Elektroden der benachbart angeordneten Elektrolysezellen 12 elektrisch kontaktieren können. Dabei ist vorgesehen, dass jeweils eine Anode einer ersten der Elektrolysezellen 12 eine Kathode der jeweils unmittelbar benachbart angeordneten zweiten Elektrolysezelle 12 elektrisch kontaktiert. Dadurch sind die Elektrolysezellen 12 elektrisch in Reihe geschaltet.

Über eine nicht weiter dargestellte innere Versorgungsstruktur des Zellenstapels 54 werden die Elektrolysezellen 12 einerseits mit zu elektrolysierendem Wasser versorgt und andererseits Ableitungen für die produzierten Stoffe Wasserstoff und Sauerstoff bereitgestellt. Diese Versorgung ist an jeweils gegenüberliegenden Enden 20, 22 des Zellenstapels 54 anschließbar ausgebildet.

An den Enden 20, 22 ist ferner über eine elektrische Leitung 52 eine elektrische Energiequelle 16 angeschlossen, die vorliegend eine geeignete elektrische Spannung mit einer geeigneten elektrischen Leistung bereitstellt, sodass die Elektrolysezellen 12 für den bestimmungsgemäßen Betrieb ausreichend mit elektrischer Energie versorgt werden können.

Die Elektrolyseeinrichtung 10 umfasst ferner eine Zellenversorgungseinheit 18, die dem Versorgen der Elektrolysezellen 12 beziehungsweise des Zellenstapels 54 mit den jeweiligen Betriebsstoffen dient, welche vorliegend das Zuführen von Wasser und das Abführen von Wasserstoff und Sauerstoff betreffen. Die Zellenversorgungseinheit 18 umfasst mehrere Komponenten, die für den bestimmungsgemäßen Betrieb der Elektrolyseeinrichtung 10 erforderlich sind, wie zum Beispiel Pumpen, Wärmetauscher, Abscheidebehälter und/oder dergleichen, die hier jedoch nicht weiter dargestellt sind. Die Zellenversorgungseinheit 18 ist mit dem Zellenstapel 54 versorgungstechnisch über Versorgungsleitungen 24 verbunden, die an die Zellenversorgungseinheit 18 und die gegenüberliegenden Enden 20, 22 des Zellenstapels 54 angeschlossen sind. Die Versorgungsleitungen 24 koppeln somit fluidtechnisch die Versorgungsstruktur des Zellenstapels 54. Die Versorgungsleitungen 24 sind vorliegend aus einem Metall wie Edelstahl gebildet.

Um durch die aus Metall gebildeten Versorgungsleitungen 24 einen Kurzschluss zwischen den Enden 20, 22 des Zellenstapels 54 zu vermeiden, weist jede der Versorgungsleitungen 24 einen elektrischen Isolierabschnitt 38 auf. Hierdurch wird gewährleistet, dass die Enden 20, 22 elektrisch isoliert von der Zellenversorgungseinheit 18 und damit auch elektrisch isoliert voneinander ausgebildet sind. Die Versorgungsleitungen 24 befinden sich außerhalb des Zellenstapels 54.

Die Isolierabschnitte 38 sind vorliegend im Wesentlichen aus einem elektrischen Isolationsmaterial gebildet, welches zum Beispiel ein geeigneter Keramikwerkstoff oder auch ein geeigneter Kunststoff beziehungsweise Verbundwerkstoff sein kann.

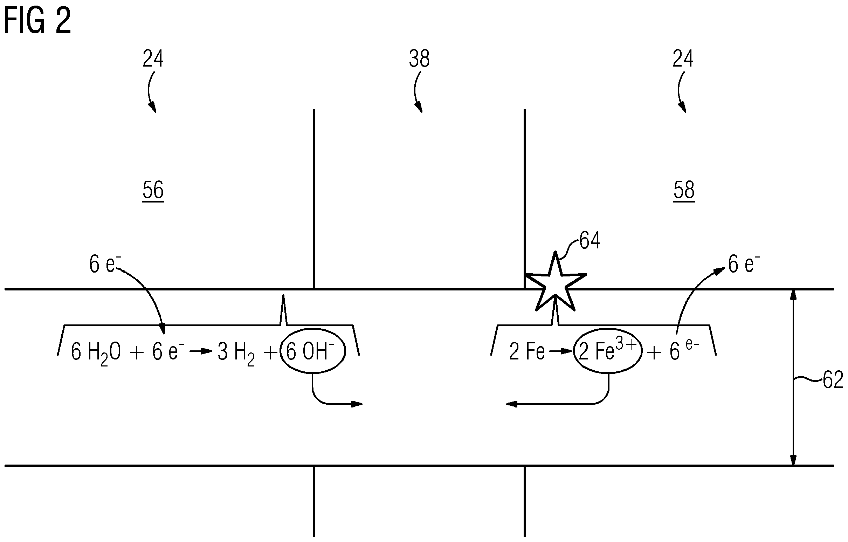

FIG 2 zeigt eine schematische Schnittansicht einer der Versorgungsleitungen 24 aus FIG 1 im Bereich des Isolierabschnitts 38. In FIG 2 ist die Versorgungsleitung 24 mit einem ersten Bereich 58 dargestellt, der dem Ende 22 des Zellenstapels 54 zugewandt ist, wohingegen ein gegenüberliegender zweiter Bereich 56 der Zellenversorgungseinheit 18 zugewandt ist. Die Bereiche 56 und 58 sind durch den Isolierabschnitt 38 elektrisch voneinander getrennt. Diese Anordnung ist insgesamt fluiddicht ausgebildet und weist einen im Wesentlichen konstanten Innendurchmesser 62 auf, durch welchen das entsprechende Fluid geführt werden kann, welches in diesem Fall Wasser ist.

Aufgrund der am elektrischen Isolierabschnitt 38 anliegenden elektrischen Spannung findet eine Korrosion in einem Bereich 64 statt. Dies kann dadurch als begründet angesehen werden, dass im Bereich eines Übergangs vom Bereich 56 zum elektrischen Isolationsabschnitt 38 durch Elektronenaufnahme aus dem Metall der Wand der Versorgungsleitung 24 in das Wasser, welches im Innendurchmesser 62 strömt, negative Hydroxidionen gebildet werden, die aufgrund des elektrischen Felds zum Bereich 58 geführt werden und dort mit dem Metall der Wand der Versorgungsleitung 24 elektrochemisch reagieren, wie in FIG 2 dargestellt. Dadurch korrodiert die Wand der Versorgungsleitung 24 in diesem Bereich 64. Das ist unerwünscht.

Für diese Art der Korrosion ist zu bedenken, dass über die elektrischen Isolierabschnitte 38 in der Regel im bestimmungsgemäßen Betrieb eine Gleichspannung in einem Bereich von mehreren hundert Volt anliegen kann. Dadurch kann im Bereich des elektrischen Isolierabschnitts 38 im Bereich 56 ein Elektronenüberschuss und im Bereich 58 ein Elektronenmangel entstehen. Aufgrund der Größe der elektrischen Spannung am elektrischen Isolierabschnitt 38 finden aus thermodynamischer Sicht Elektrodenreaktionen, wie zuvor erläutert, statt. Zwar kann durch Reduzierung der elektrischen Spannung der Korrosionseffekt zeitlich gestreckt werden, also kinetisch gehemmt werden, jedoch kann er dadurch nicht vollständig unterbunden werden. Auch eine Verlängerung der Isolationsstrecke mittels des elektrischen Isolierabschnitts 38 oder eine Reduzierung im Innendurchmesser 62 können lediglich den Korrosionseffekt hinsichtlich seiner Wirkung hemmen, jedoch nicht vermeiden.

Im Bereich 56 kann der hierbei gebildete Wasserstoff im Wasser gelöst oder auch in Form von feinsten Bläschen vorliegen und mit dem Wasser abtransportiert werden. Die produzierten Mengen sind dabei in der Regel so gering, dass vom Wasserstoff selbst keine störenden Wirkungen ausgehen.

In Bezug auf die Hydroxidionen, die im Wasser in gelöster Form vorliegen, trifft dies jedoch nicht zu. Sie tendieren wegen ihrer negativen Ladung und der Richtung des elektrischen Felds im Bereich des elektrischen Isolierabschnitts 38 dazu, vom Bereich 56 zum Bereich 58 zu wandern. In diesem Bereich 58 wird dann das metallische Material der Versorgungsleitung 24 oxidativ zersetzt. In FIG 2 ist diese Zersetzung für den Fall dargestellt, dass die Versorgungsleitung 24 aus Edelstahl gebildet ist. Diese Wirkung ist jedoch nicht auf Stahl begrenzt, sondern kann nahezu bei jedem anderen beliebigen metallischen Werkstoff auftreten.

Neben dem Freisetzen von Eisen können aber auch weitere Metalle, die im Stahl vorhanden sein können, aufgelöst werden. Hierbei können Kationen gebildet werden. Wegen deren positiver Ladung haben die Metall-Kationen die Tendenz, in Gegenrichtung der Hydroxidionen zu wandern. Dies kann dazu führen, dass aus den Metall-Kationen, insbesondere wenn es sich um Eisen-Ionen handelt, und den Hydroxidionen sogenanntes Rouging entstehen. Rouging meint feinste eisenhaltige Partikel, die sich in den Versorgungsleitungen 24 und den Komponenten der Elektrolyseeinrichtung 10 verteilen können. Sie können vor allem in den Versorgungsleitungen 24, in denen ebenfalls Wasserstoff geführt wird, beobachtet werden. Gelangt dieses Rouging in den sauerstoffführenden Teil der Elektrolyseeinrichtung 10, kann sich das Rouging wieder unter Bildung von Ionen auflösen.

Unter anderem können dann Kationen von der Sauerstoffseite aus in die Elektrolysezellen 12 gelangen und sich dort anreichern. Dieser Vorgang kann zu höheren Zellspannungen und damit sinkender Effizienz der Elektrolyseeinrichtung 10 führen. Weiterhin können schädigende Mechanismen für die Elektrolysezellen 12 mit diesen Kationen in Verbindung gebracht werden. Beispielsweise kann an den Elektroden gebildetes Wasserstoffperoxid bei Kontakt mit Metallionen in Radikale umgewandelt werden, welche eine Membranstruktur der Elektrolysezellen 12 chemisch angreifen und so die Standzeit der Elektrolysezellen 12 beeinträchtigen können.

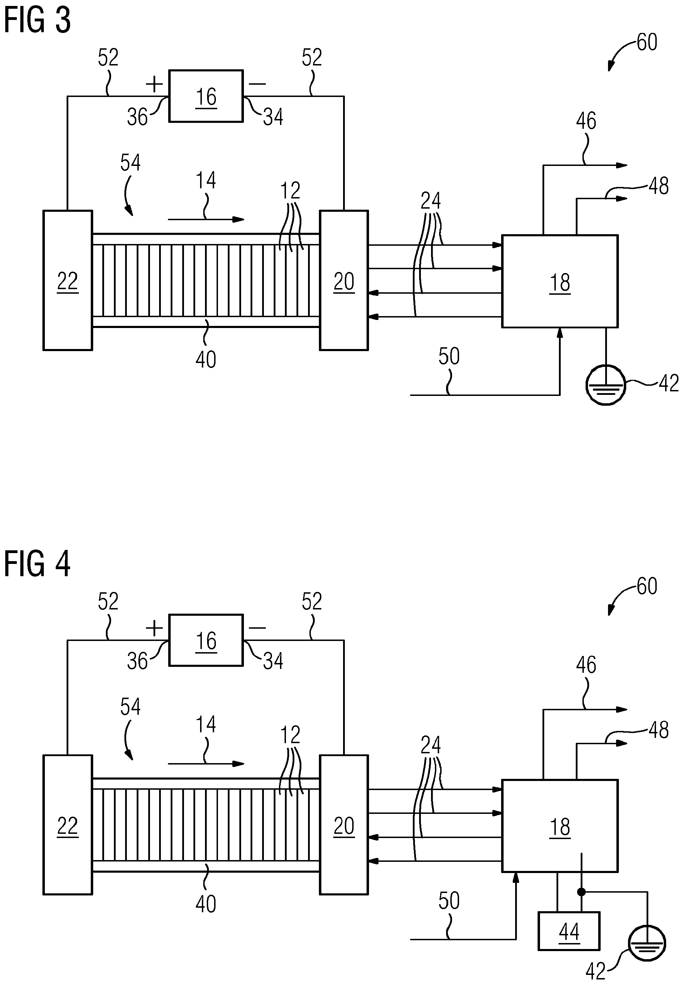

FIG 3 zeigt nun eine Elektrolyseeinrichtung 60, mit der der vorgenannte Korrosionseffekt, der anhand von FIG 2 erläutert wurde, weitgehend vermieden werden kann. Die Konstruktion der Elektrolyseeinrichtung 60 basiert auf der Konstruktion der Elektrolyseeinrichtung 10, wie zuvor anhand der FIG 1 und 2 erläutert. Die folgenden Erläuterungen basieren deshalb auf den Erläuterungen zu den FIG 1 und 2, weshalb ergänzend auf die diesbezüglichen Ausführungen verwiesen wird.

Wie aus FIG 3 ersichtlich ist, sind die Elektrolysezellen 12 auch hier in einem Zellenstapel 54 angeordnet. Die Versorgungsleitungen 24 sind ausschließlich an einem ersten Ende 20 des Zellenstapels 54 angeschlossen, sodass das erste Ende 20 des Zellenstapels 54 mit der Zellenversorgungseinheit 18 elektrisch gekoppelt ist. Das erste Ende 20 des Zellenstapels 54 ist mit einem negativen elektrischen Potential 34 der elektrischen Energiequelle 16 elektrisch gekoppelt. Das zweite Ende 22 des Zellenstapels 54 ist mit einem positiven elektrischen Potential 36 der elektrischen Energiequelle 16 elektrisch gekoppelt. Für die Zellenversorgungseinheit 18 gelten im Wesentlichen die Ausführungen zu den FIG 1 und 2.

Die Elektrolysezellen 12 sind auch hier elektrisch in Reihe geschaltet, sodass - aus elektrischer Sicht - wieder eine Reihenschaltung aller Elektrolysezellen 12 des Zellenstapels 54 - wie bei dem Zellenstapel 54 gemäß FIG 1 - vorliegt.

Durch diese Konstruktion der Elektrolyseeinrichtung 60 kann erreicht werden, dass die Zellenversorgungseinheit 18 elektrisch betrachtet das kleinste elektrische Potential der gesamten Elektrolyseeinrichtung 60 aufweist. Dieses elektrische Potential ist ferner mit dem negativen elektrischen Potential 34 der elektrischen Energiequelle 16 verbunden. Die elektrische Energiequelle 16 stellt darüber hinaus das positive elektrische Potential 36 bereit. Zwischen dem negativen und dem positiven elektrischen Potential 34, 36 stellt die elektrische Energiequelle 16 die Betriebsspannung für den bestimmungsgemäßen Betrieb der Elektrolyseeinrichtung 60 bereit.

Der Zellenstapel 54 weist Zellenanschlussleitungen 40, auch Manifold genannt, zum fluidtechnischen Koppeln der Elektrolysezellen 12 mit den am ersten Ende 20 angeschlossenen Versorgungsleitungen 24 auf. Die Zellenanschlussleitungen 40 sind im Zellenstapel 54 integriert ausgebildet, sodass es einer entsprechenden zellenstapelexternen Versorgungsstruktur nicht bedarf.

Die Zellenanschlussleitungen 40 weisen jeweils eine Durchgangsöffnung auf, die so ausgebildet ist, dass ein Druckabfall an den Zellenanschlussleitungen 40 einen gleichmäßigen bestimmungsgemäßen Betrieb der Elektrolysezellen 12 erlaubt. In der vorliegenden Ausgestaltung ist der Druckabfall möglichst klein, sodass er für den bestimmungsgemäßen Betrieb der Elektrolyseeinrichtung 60 vernachlässigt werden kann. Dadurch können die Elektrolysezellen 12 im bestimmungsgemäßen Betrieb zum Beispiel mit einem gleichen Betriebsdruck beaufschlagt sein. Zu diesem Zweck weisen die Zellenanschlussleitungen 40 Durchgangsöffnungen mit jeweiligen entsprechenden Innendurchmessern auf, sodass ein etwaiger Druckabfall beim Führen des jeweiligen Fluids weitgehend vernachlässigt werden kann. Je nach Bedarf kann der jeweilige Innendurchmesser auch bei einer jeweiligen der Zellenanschlussleitungen 40 variieren. So kann der Innendurchmesser beispielsweise am ersten Ende 20 des Zellenstapels 54 größer als am zweiten Ende 22 des Zellenstapels 54 sein. Insbesondere können die Zellenanschlussleitungen 40 zumindest abschnittsweise auch in die Elektrolysezellen 12 integriert sein. Durch das Stapeln der Elektrolysezellen 12 können zugleich auch die Zellenanschlussleitungen 40 bereitgestellt werden.

In dieser Ausgestaltung ist ferner vorgesehen, dass die Durchgangsöffnungen der Zellenanschlussleitungen 40 eine Innenoberfläche aufweisen, die mit einer anodisch stabilen Schicht beschichtet ist. Dadurch können Korrosionseffekte weiter reduziert werden. Zu diesem Zweck sind die Zellenanschlussleitungen 40 vorliegend nicht-metallisch ausgebildet.

Zugleich kann hierdurch auch erreicht werden, dass die Zellenanschlussleitungen 40 elektrisch isoliert ausgebildet sind. Eine separate elektrische Isolation kann somit eingespart werden.

Durch die Erfindung ist es ferner möglich, dass die Versorgungsleitungen 24 - wie bei dieser Ausgestaltung - isolierabschnittslos ausgebildet sind. Fertigungstechnisch und betriebstechnisch ergeben sich dadurch besondere Vorteile, insbesondere auch im Hinblick auf die Sicherheit.

Besonders vorteilhaft erweist es sich, wenn die Zellenversorgungseinheit 18, wie vorliegend in FIG 3 dargestellt ist, mittels einer Erdung 42 elektrisch geerdet ist.

Besonders vorteilhaft ist eine Weiterbildung gemäß FIG 4 vorgesehen. FIG 4 zeigt in einer schematischen Darstellung wie FIG 3 eine Variante der Elektrolyseeinrichtung 60 gemäß FIG 3, wobei im Folgenden lediglich die Unterschiede in Bezug zur Ausgestaltung gemäß FIG 3 erläutert werden.

In FIG 4 ist vorgesehen, dass die Erdung 42 nicht unmittelbar an der Zellenversorgungseinheit 18 vorgesehen ist, sondern unter Nutzung einer Spannungsquelle 44, mittels der die Zellenversorgungseinheit 18 mit einem gegenüber dem Erdpotential negativen elektrischen Potential beaufschlagbar ist. Zu diesem Zweck stellt die Spannungsquelle 44 eine elektrische Spannung von etwa -1 V bis etwa -0,8 V bereit. Diese Spannung kann jedoch grundsätzlich auch zum Beispiel in einem Bereich von etwa -2 V bis etwa null Volt gewählt sein.

Mit einer derart eingestellten elektrischen Spannung lässt sich der Korrosionseffekt, beispielsweise bei Edelstahl, auch unter maritimen Bedingungen, beispielsweise bei Off-Shore-Anwendungen, gegen Korrosion noch besser unterdrücken.

Besonders vorteilhaft erweist es sich, wenn dann die Gegenelektrode für den kathodischen Korrosionsschutz auch im Bereich der Zellenversorgungseinheit 18 angeordnet ist. Die hier für die Erdung 42 vorgesehene Elektrode ist vorliegend durch eine Titananode gebildet, die mit einem Mischoxid beschichtet ist. Die Titananode mit der Mischoxidbeschichtung ist vorliegend elektrisch isoliert von der Zellenversorgungseinheit 18 in einer Flüssigphase eines nicht weiter dargestellten Sauerstoffabscheidebehälters angeordnet.

Insgesamt zeigen die Ausführungsbeispiele, dass mit der Erfindung erreicht werden kann, dass die Korrosion dadurch reduziert werden kann, dass sämtliche Versorgungsleitungen 24 einerseits mit der Zellenversorgungseinheit 18 und andrerseits nur mit dem ersten Ende 20 des Zellenstapels 54 verbunden sind.

Durch das Erdungs- beziehungsweise Massekonzept der Erfindung kann die Freisetzung von Metallionen weitgehend verhindert werden. Die Elektroden der aktiven Zellflächen der Elektrolysezellen 12 können daher für Streuströme als anodische Gegenelektroden wirken. Somit kann die unerwünschte Korrosion weitgehend vermieden werden.

Die Erfindung ist nicht auf die Anwendung bei der Elektrolyse von Wasser beschränkt und kann gleichermaßen auch bei anderen durchzuführenden Elektrolysen, beispielsweise einer Kohlenstoffdioxidelektrolyse oder dergleichen zum Einsatz kommen.

Die Ausführungsbeispiele dienen ausschließlich der Erläuterung der Erfindung und sollen diese nicht beschränken.

## Patentansprüche

1. Elektrolyseeinrichtung (60) mit
- einer Mehrzahl von Elektrolysezellen (12), die elektrisch in Reihe geschaltet und die zumindest teilweise in einer Stapelrichtung (14) aufeinanderfolgend in einem Zellenstapel (54) angeordnet sind, wobei die Reihenschaltung mit einer elektrischen Energiequelle (16) elektrisch koppelbar ist,
- einer Zellenversorgungseinheit (18) zum Versorgen der Elektrolysezellen (12) in einem bestimmungsgemäßen Betrieb mit wenigstens einem Betriebsstoff, und
- an die Zellenversorgungseinheit (18) und an den Zellenstapel (54) angeschlossenen Versorgungsleitungen (24), wobei ein Werkstoff der Versorgungsleitungen (24) Metall aufweist,
**dadurch gekennzeichnet, dass**
die Versorgungsleitungen (24) ausschließlich an einem ersten Ende (20) des Zellenstapels (54) angeschlossen sind, sodass das erste Ende (20) des Zellenstapels (54) mit der Zellenversorgungseinheit (18) elektrisch gekoppelt ist, wobei das erste Ende (20) des Zellenstapels (54) mit einem negativen elektrischen Potential (34) der elektrischen Energiequelle (16) koppelbar ist.

2. Elektrolyseeinrichtung nach Anspruch 1, **dadurch gekennzeichnet, dass** der Zellenstapel (54) Zellenanschlussleitungen (40) zum fluidtechnischen Koppeln der Elektrolysezellen (12) mit den am ersten Ende (20) angeschlossenen Versorgungsleitungen (24) aufweist.

3. Elektrolyseeinrichtung nach Anspruch 2, **dadurch gekennzeichnet, dass** die Zellenanschlussleitungen (40) jeweils eine Durchgangsöffnung aufweisen, die so ausgebildet ist, dass ein Druckabfall an den Zellenanschlussleitungen (40) einen gleichmäßigen bestimmungsgemäßen Betrieb der Elektrolysezellen (12) erlaubt.

4. Elektrolyseeinrichtung nach Anspruch 2 oder 3, **dadurch gekennzeichnet, dass** die Durchgangsöffnung eine Innenoberfläche aufweist, die mit einer anodisch stabilen Schicht beschichtet ist.

5. Elektrolyseeinrichtung nach einem der Ansprüche 2 bis 4, **dadurch gekennzeichnet, dass** die Zellenanschlussleitungen (40) zumindest teilweise nicht-metallisch ausgebildet sind.

6. Elektrolyseeinrichtung nach einem der Ansprüche 2 bis 5, **dadurch gekennzeichnet, dass** die Zellenanschlussleitungen (40) zumindest teilweise elektrisch isoliert ausgebildet sind.

7. Elektrolyseeinrichtung nach einem der vorhergehenden Ansprüche, **dadurch gekennzeichnet, dass** die Versorgungsleitungen (24) zumindest teilweise isolierabschnittslos ausgebildet sind.

8. Elektrolyseeinrichtung nach einem der vorhergehenden Ansprüche, **dadurch gekennzeichnet, dass** die Zellenversorgungseinheit (18) zumindest mittelbar elektrisch geerdet (42) ist.

9. Elektrolyseeinrichtung nach Anspruch 8, **dadurch gekennzeichnet, dass** die Erdung (42) eine Opferanode und/oder eine Spannungsquelle (44) aufweist, mittels der die Zellenversorgungseinheit (18) mit einem gegenüber dem Erdpotential (42) negativen elektrischen Potential beaufschlagbar ist.

10. Elektrolyseeinrichtung nach Anspruch 9, **dadurch gekennzeichnet, dass** die Spannungsquelle ausgebildet ist, eine elektrische Spannung in einem Bereich von -2 V bis null Volt bereitzustellen.

## Claims

1. Electrolysis device (60) having
- a plurality of electrolytic cells (12) which are electrically connected in series and which are arranged at least partially in a stacking direction (14) one after the other in a cell stack (54), wherein the series circuit is electrically couplable to an electrical energy source (16),
- a cell supply unit (18) for supplying the electrolytic cells (12) with at least one fuel during operation as intended, and
- supply lines (24) attached to the cell supply unit (18) and to the cell stack (54), wherein a material of the supply lines (24) has metal,
**characterized in that**
the supply lines (24) are attached exclusively to a first end (20) of the cell stack (54), such that the first end (20) of the cell stack (54) is electrically coupled to the cell supply unit (18), wherein the first end (20) of the cell stack (54) is couplable to a negative electrical potential (34) of the electrical energy source (16).

2. Electrolysis device according to Claim 1, **characterized in that** the cell stack (54) has cell attachment lines (40) for fluidically coupling the electrolytic cells (12) to the supply lines (24) attached to the first end (20).

3. Electrolysis device according to Claim 2, **characterized in that** the cell attachment lines (40) each have a through opening which is formed in such a way that a pressure drop at the cell attachment lines (40) allows the electrolytic cells (12) to operate uniformly as intended.

4. Electrolysis device according to Claim 2 or 3, **characterized in that** the through opening has an inner surface which is coated with an anodically stable layer.

5. Electrolysis device according to one of Claims 2 to 4, **characterized in that** the cell attachment lines (40) are designed to be at least partially non-metallic.

6. Electrolysis device according to one of Claims 2 to 5, **characterized in that** the cell attachment lines (40) are designed to be at least partially electrically insulated.

7. Electrolysis device according to one of the preceding claims, **characterized in that** the supply lines (24) are formed at least partially without insulating portions.

8. Electrolysis device according to one of the preceding claims, **characterized in that** the cell supply unit (18) is at least indirectly electrically grounded (42).

9. Electrolysis device according to Claim 8, **characterized in that** the grounding (42) has a sacrificial anode and/or a voltage source (44) by means of which the cell supply unit (18) can have a negative electrical potential applied to it relative to the ground potential (42).

10. Electrolysis device according to Claim 9, **characterized in that** the voltage source is designed to provide an electrical voltage in a range from -2 V to zero volts.

## Revendications

1. Dispositif (60) d'électrolyse comprenant
- une pluralité de cellules (12) d'électrolyse, qui sont montées en série électriquement et qui sont disposées au moins en partie en un empilement (54) de cellules se succédant dans une direction (14) d'empilement, dans lequel le circuit série peut être connecté électriquement à une source (16) d'énergie électrique,
- une unité (18) d'alimentation de cellules pour l'alimentation des cellules (12) d'électrolyse en au moins une matière consommable dans un fonctionnement conforme aux prescriptions, et
- des lignes (24) d'alimentation raccordées à l'unité (18) d'alimentation de cellules et à l'empilement (54) de cellules, dans lequel un matériau des lignes (24) d'alimentation comporte du métal,
**caractérisé en ce que**
les lignes (24) d'alimentation sont raccordées exclusivement à une première extrémité (20) de l'empilement (54) de cellules, de sorte que la première extrémité (20) de l'empilement (54) de cellules est connectée électriquement à l'unité (18) d'alimentation de cellules, dans lequel la première extrémité (20) de l'empilement (54) de cellules peut être connectée à un potentiel (34) électrique négatif de la source (16) d'énergie électrique.

2. Dispositif d'électrolyse suivant la revendication 1, **caractérisé en ce que** l'empilement (54) de cellules a des lignes (40) de raccordement de cellules pour le raccordement en technique des fluides des cellules (12) d'électrolyse aux lignes (24) d'alimentation raccordées à la première extrémité (20).

3. Dispositif d'électrolyse suivant la revendication 2, **caractérisé en ce que** les lignes (40) de raccordement de cellules ont chacune une ouverture de passage, qui est constituée, de manière à ce qu'une chute de pression sur les lignes (40) de raccordement de cellules autorise un fonctionnement uniforme conforme aux prescriptions des cellules (12) d'électrolyse.

4. Dispositif d'électrolyse suivant la revendication 2 ou 3, **caractérisé en ce que** l'ouverture de passage a une surface intérieure, qui est revêtue d'une couche stable anodiquement.

5. Dispositif d'électrolyse suivant l'une des revendications 2 à 4, **caractérisé en ce que** les lignes (40) de raccordement de cellules sont constituées au moins en partie d'une manière non métallique.

6. Dispositif d'électrolyse suivant l'une des revendications 2 à 5, **caractérisé en ce que** les lignes (40) de raccordement de cellules sont constituées en étant isolées électriquement au moins en partie.

7. Dispositif d'électrolyse suivant l'une des revendications précédentes, **caractérisé en ce que** les lignes (24) d'alimentation sont constituées sans tronçon isolant au moins en partie.

8. Dispositif d'électrolyse suivant l'une des revendications précédentes, **caractérisé en ce que** l'unité (18) d'alimentation de cellules est mise à la terre (42) électriquement au moins indirectement.

9. Dispositif d'électrolyse suivant la revendication 8, **caractérisé en ce que** la mise à la terre (42) a une anode sacrificielle et/ou une source (44) de tension, au moyen de laquelle il peut être appliqué à l'unité (18) d'alimentation de cellules un potentiel électrique négatif par rapport au potentiel (42) de terre.

10. Dispositif d'électrolyse suivant la revendication 9, **caractérisé en ce que** la source de tension est constituée pour donner une tension électrique dans une plage allant de -2 V jusqu'à 0 volt.
